# EUROPÄISCHE PATENTANMELDUNG

(11) **EP 2 175 331 A1**
(43) Veröffentlichungstag der Anmeldung: **14.04.2010**
(21) Anmeldenummer: 09167996.9
(22) Anmeldetag: 17.08.2009
(51) Int. Cl.: G05B 19/042, B60R 16/02

(54) **Steuerbares Gerät mit einem Steuerprogramm und Verfahren zum Steuern des Geräts**

(30) Priorität: 10.10.2008 DE 102008042744
(71) Anmelder: Robert Bosch GmbH, 70442 Stuttgart (DE)
(72) Erfinder: Behme, Dirk, 31139, Hildesheim (DE)

(57) **Zusammenfassung**

Ein steuerbares Gerät mit einem Steuerprogramm gehört einem von mindestens zwei unterschiedlichen Gerätetypen an. Das Steuerprogramm ist zur Steuerung von Geräten geeignet, die einem der mindestens zwei unterschiedlichen Gerätetypen angehören. Das Steuerprogramm hält für die unterschiedlichen Gerätetypen je eine Konfigurationstabelle vor. Jede Konfigurationstabelle umfasst eine Anzahl von Konfigurationsdaten. Das Steuerprogramm ist dazu ausgebildet, den Gerätetyp des Geräts anhand einer von dem Gerät bereitgestellten Typenkennung zu ermitteln, die zum Gerätetyp des Geräts passende Konfigurationstabelle auszuwählen, die in der ausgewählten Konfigurationstabelle enthaltenen Konfigurationsdaten zu lesen und das Gerät in Abhängigkeit von den gelesenen Konfigurationsdaten zu steuern.

## Beschreibung

Die Erfindung betrifft ein steuerbares Gerät mit einem Steuerprogramm, ein Verfahren zum Erstellen eines Steuerprogramms zum Steuern eines Geräts und ein Verfahren zum Steuern eines Geräts.

### Stand der Technik

Steuerbare elektronische Geräte, beispielsweise Infotainmentsysteme im Automobilbereich, weisen Hardwareanteile und Softwareanteile auf. Die Softwareanteile beinhalten ein Steuerprogramm, das für die Steuerung der Hardwareanteile des steuerbaren Geräts zuständig ist. Derartige steuerbare Geräte werden häufig nach einem Komponenten- oder Plattformmodell entwickelt. Dabei stehen eine Anzahl von Hardwarekomponenten zur Verfügung, aus denen zur Entwicklung eines konkreten Geräts Komponenten ausgewählt und miteinander kombiniert werden. In der Regel ist auch eine Anpassung des Steuerprogramms an die verwendeten Hardwarekomponenten notwendig. Hierfür gibt es im Stand der Technik mehrere Methoden.

Eine erste bekannte Methode besteht darin, zum Erstellzeitpunkt des Steuerprogramms durch entsprechende Vorkehrungen eine statische Konfigurierbarkeit des Steuerprogramms vorzusehen. Zum Übersetzungszeitpunkt des Steuerprogramms wird eine bestimmte Konfiguration ausgewählt. Das übersetzte Steuerprogramm ist dann optimal auf ein spezielles steuerbares Gerät zugeschnitten, jedoch lediglich für dieses spezielle steuerbare Gerät geeignet. Bei einem Plattformmodell mit einer großen Zahl von Hardwarekomponenten und Kombinationsmöglichkeiten erfordert diese Methode einen großen logistischen und zeitlichen Aufwand zur Erzeugung und Verwaltung einer Vielzahl speziell zugeschnittener Steuerprogramme.

Eine zweite bekannte Methode besteht darin, im steuerbaren Gerät eine in einem Textformat vorliegende, von Menschen lesbare Konfigurationsdatei zu hinterlegen, die zur Laufzeit durch das Steuerprogramm ausgewertet wird. Diese Methode bietet den Vorteil, dass nur eine Fassung anstatt einer Vielzahl von Fassungen des Steuerprogramms erzeugt und verwaltet werden muss. Allerdings muss für jedes konkrete steuerbare Gerät eine eigene Konfigurationsdatei erstellt und verwaltet werden. Außerdem erfordert die Auswertung der im Textformat hinterlegten Konfigurationsdatei zur Laufzeit des Steuerprogramms einen großen zeitlichen und rechnerischen Aufwand. Zudem verbraucht die im Textformat vorliegende Konfigurationsdatei unnötig viel Speicherplatz im steuerbaren Gerät. Zusätzlich sind die durch die Konfigurationsdatei bereit gestellten Konfigurationsmöglichkeiten auf textuelle Schüssel-Wertepaare limitiert.

### Offenbarung der Erfindung

Die Aufgabe der Erfindung besteht darin, ein verbessertes steuerbares Gerät mit einem Steuerprogramm bereitzustellen. Diese Aufgabe wird durch ein steuerbares Gerät mit einem Steuerprogramm gemäß Anspruch 1 gelöst. Außerdem ist es Aufgabe der Erfindung, ein Verfahren zum Erstellen eines Steuerprogramms zum Steuern eines Geräts bereitzustellen. Diese Aufgabe wird durch ein Verfahren gemäß Anspruch 6 gelöst. Eine weitere Aufgabe der Erfindung besteht darin, ein Verfahren zum Steuern eines Geräts bereitzustellen. Diese Aufgabe wird durch ein Verfahren gemäß Anspruch 11 gelöst. Bevorzugte Weiterbildungen sind in den abhängigen Ansprüchen angegeben.

Die Erfindung gestattet es, aus unterschiedlichen Komponenten einer Geräteplattform zusammengesetzte Geräte unterschiedlicher Gerätetypen mittels des selben Steuerprogramms zu steuern. Durch eine Konfiguration und Anpassung des Steuerprogramms zur Laufzeit des Steuerprogramms anhand einer Typenkennung und im Steuerprogramm integrierter Konfigurationstabellen wird eine Fehlkonfiguration durch manuell falsch zugewiesene Steuerprogrammfassungen vermieden. Das Steuerprogramm muss nur einmal für alle Gerätetypen erzeugt werden. Durch Verwendung desselben Steuerprogramms auf Geräten unterschiedlicher Gerätetypen wird die Testtiefe des Steuerprogramms erhöht.

### Kurze Beschreibung der Zeichnungen

Figur 1 zeigt eine schematische Darstellung zweier steuerbarer Geräte unterschiedlicher Gerätetypen;
Figur 2 zeigt eine schematische Darstellung eines Übersetzungsvorgangs, der aus dem Quelltext eines Steuerprogramms ein Steuerprogramm erzeugt;
Figur 3 zeigt in einem Flussdiagramm schematisch einen Ausschnitt aus einem Steuerprogramm;
Figur 4 zeigt in einem Flussdiagramm schematisch einen Ausschnitt eines Steuerprogramms.

### Ausführungsformen der Erfindung

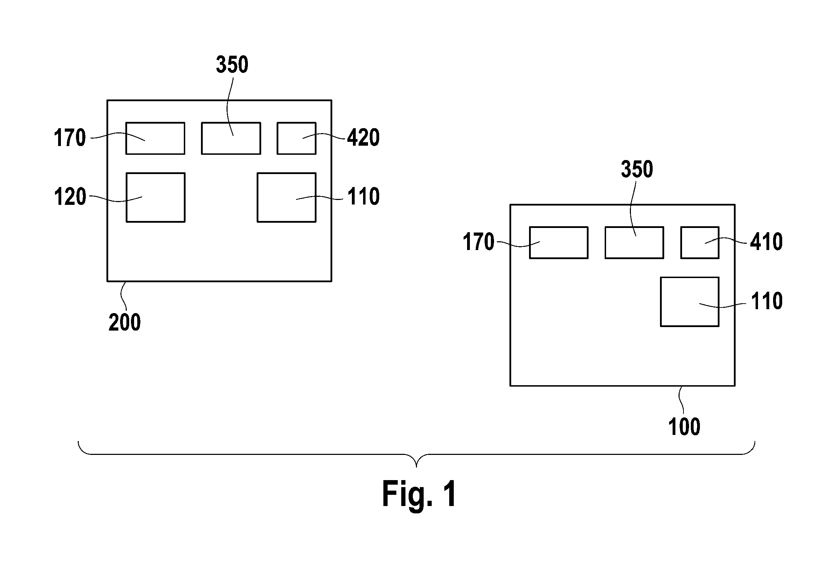

Figur 1 zeigt in schematischer Darstellung ein erstes Gerät 100 eines ersten Gerätetyps und ein zweites Gerät 200 eines zweiten Gerätetyps. Bei dem ersten Gerät 100 und dem zweiten Gerät 200 kann es sich beispielsweise um Infotainmentsysteme aus dem Automobilbereich handeln. Das erste Gerät 100 und das zweite Gerät 200 sind nach einem Plattformmodell entwickelt worden und enthalten jeweils eine oder mehrere Gerätekomponenten aus einem Plattformportfolio mit einer Mehrzahl in die Geräte 100, 200 integrierbarer Komponenten. Im in Figur 1 dargestellten Beispiel enthalten sowohl das erste Gerät 100 als auch das zweite Gerät 200 je ein Radio 110. Das zweite Gerät 200 enthält zusätzlich einen Bildschirm 120. Im ersten Gerät 100 wurde auf einen Bildschirm verzichtet. Das erste Gerät 100 und das zweite Gerät 200 könnten wahlweise zusätzliche im Plattformportfolio vorgesehene Gerätekomponenten wie Navigationsgeräte oder CD-Spieler aufweisen. Im Plattformportfolio könnten beispielsweise auch verschiedene Bildschirme unterschiedlicher Größe vorgesehen sein, aus denen bei der Zusammenstellung eines konkreten Geräts einer ausgewählt wird. Eine eindeutige Zusammenstellung bestimmter Gerätekomponenten wird als Gerätetyp bezeichnet. Das Plattformmodell bietet den Vorteil, dass die im Plattformportfolio vorgesehenen Gerätekomponenten zu einer Vielzahl unterschiedlicher Gerätetypen kombiniert werden können, die jeweils an die speziellen Bedürfnisse des Kunden angepasst sind. Die Verwendung einheitlicher Gerätekomponenten aus dem Plattformportfolio reduziert die Entwicklungskosten des konkreten kundenspezifischen Gerätetyps.

Das erste Gerät 100 und das zweite Gerät 200 weisen jeweils eine Typenkennung auf. Das erste Gerät 100 weist eine erste Typenkennung 410 auf. Die erste Typenkennung 410 gibt Auskunft über die im ersten Gerät 100 integrierten Gerätekomponenten. Alle Geräte, die die gleichen Gerätekomponenten wie das erste Gerät 100 enthalten, weisen die gleiche erste Typenkennung 410 wie das erste Gerät 100 auf. Geräte, in denen andere Gerätekomponenten aus dem Plattformportfolio integriert sind, weisen eine andere Typenkennung auf. Beispielsweise weist das zweite Gerät 200 eine zweite Typenkennung 420 auf. Jede mögliche Typenkennung kennzeichnet also eine eindeutige Zusammenstellung von Gerätekomponenten. Die erste Typenkennung 410 und die zweite Typenkennung 420 können beispielsweise in nichtflüchtigen Datenspeichern des ersten Geräts 100 und des zweiten Geräts 200 abgelegt sein. Die nichtflüchtigen Datenspeicher können beispielsweise Nur-LeseSpeicher sein. Die erste Typenkennung 410 und die zweite Typenkennung 420 können aber auch durch in das erste Gerät 100 und das zweite Gerät 200 integrierte Widerstandsnetzwerke kodiert sein. Das jeweilige Widerstandsnetzwerk wird dabei während des Zusammenbaus des jeweiligen Geräts 100, 200 entsprechend der zu kodierenden Typenkennung 410, 420 mit Widerständen bestückt. Dies hat den Vorteil, dass die Hinterlegung der jeweiligen Typenkennung 410, 420 in den Geräten 100, 200 zur gleichen Zeit wie die Bestückung der Geräte 100, 200 mit Gerätekomponenten 110, 120 erfolgt, was die Gefahr einer Hinterlegung einer falschen Typenkennung im jeweiligen Gerät 100, 200 reduziert.

Jedes der Geräte 100, 200 weist eine Anzahl zusätzlicher Bauteile 170 auf. Die zusätzlichen Bauteile 170 können eine Bedieneinheit des jeweiligen Geräts, Sensoren des jeweiligen Geräts, einen Prozessor, einen Datenspeicher und andere Bauteile umfassen. Der Prozessor jedes Geräts 100, 200 ist dazu ausgebildet, ein im Datenspeicher des jeweiligen Geräts 100, 200 hinterlegtes Steuerprogramm auszuführen.

Im Datenspeicher beider Geräte 100, 200 ist ein Steuerprogramm 350 in einem binären Maschinenformat hinterlegt. Beide Geräte 100, 200 weisen dasselbe Steuerprogramm 350 auf. Dies hat den Vorteil, dass bei der Herstellung der Geräte 100, 200 nicht versehentlich ein falsches Steuerprogramm hinterlegt werden kann. Durch die Verwendung des einheitlichen Steuerprogramms 350 werden außerdem die Entwicklungskosten der Geräte 100, 200 reduziert. Das Steuerprogramm 350 ist zur Steuerung aller in die Geräte 100, 200 integrierbarer Gerätekomponenten des Plattformportfolios geeignet. Das Steuerprogramm 350 ist dazu ausgebildet, die jeweilige Typenkennung 410, 420 der Geräte 100, 200 auszulesen und anhand der ausgelesenen Typenkennung 410, 420 festzustellen, welche Gerätekomponenten in das jeweilige Gerät 100, 200 integriert sind. Das Steuerprogramm 350 ist dazu ausgebildet, sich je nach gelesener Typenkennung geeignet zu konfigurieren, um die in ein Gerät mit dieser Typenkennung integrierten Gerätekomponenten zu steuern. Hierfür weist das Steuerprogramm 350 für jede mögliche Typenkennung eine Konfigurationstabelle auf, die Konfigurationsdaten enthält, die für die Steuerung der jeweiligen Gerätekomponenten benötigt werden.

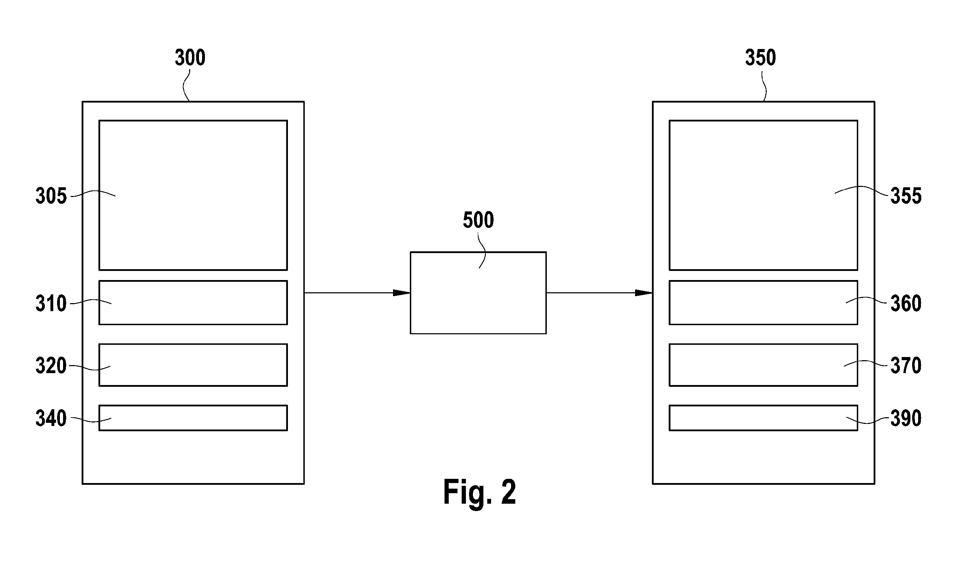

Figur 2 illustriert schematisch den Erstellungsvorgang und den Aufbau des Steuerprogramms 350. Ein Programmierer verfasst ein Steuerprogramm als Quelltext 300 in einer Programmiersprache. Bei der Programmiersprache kann es sich um eine beliebige Programmiersprache, beispielsweise um die Programmiersprache C handeln. In diesem Fall liegt der Quelltext 300 des Steuerprogramms als menschenlesbare Textdatei vor. Bei der Programmiersprache kann es sich aber beispielsweise auch um eine graphische Programmiersprache, beispielsweise um die Programmiersprache G handeln. In diesem Fall liegt der Quelltext 300 des Steuerprogramms im Quellformat der gewählten Programmiersprache vor.

Der Quelltext 300 des Steuerprogramms umfasst einen Quelltext 305 eines allgemeinen Teils des Steuerprogramms. Der allgemeine Teil des Steuerprogramms enthält die eigentliche Programmlogik des Steuerprogramms. Weiter enthält der Quelltext 300 des Steuerprogramms eine erste Quelltabelle 310. Die erste Quelltabelle 310 enthält Konfigurationsdaten für solche Geräte, die die erste Typenkennung 410 aufweisen. Die erste Quelltabelle 310 ist mit den von der gewählten Programmiersprache bereitgestellten Sprachmitteln verfasst. In der Programmiersprache C kann die erste Quelltabelle beispielsweise so aussehen:

```
 configuration_data_device1[] = {
  {DEVICE _HAS_ RADIO}, / * ENTRY _RADIO_ CONFIGURATION * /
  {DEVICE_HAS_NO_DISPLAY}, / * ENTRY_DISPLAY_CONFIGURATION * /
 };
```

Diese beispielhafte erste Quelltabelle 310 besagt, dass Geräte des ersten Gerätetyps mit der ersten Typenkennung 410 ein Radio 110, aber keinen Bildschirm 120 aufweisen. Die erste Quelltabelle 310 verwendet das durch die Programmiersprache C bereitgestellte Sprachmittel *Array.*

Der Quelltext 300 des Steuerprogramms umfasst weiter eine zweite Quelltabelle 320 mit Konfigurationsdaten für solche Geräte, die die zweite Typenkennung 420 aufweisen. In der Programmiersprache C kann die zweite Quelltabelle 320 beispielsweise so aussehen:

```
 configuration_data_device2[] = {
  {DEVICE_HAS_ RADIO}, / * ENTRY_ RADIO_ CONFIGURATION * /
  {DEVICE_HAS_DISPLAY}, / * ENTRY_DISPLAY_CONFIGURATION * /
 };
```

Diese zweite Quelltabelle 320 besagt, dass Geräte des zweiten Gerätetyps mit der zweiten Typenkennung 420 sowohl ein Radio 110 als auch einen Bildschirm 120 aufweisen.

Falls das zu erstellende Steuerprogramm 350 zur Steuerung weiterer Gerätetypen mit weiteren Typenkennungen vorgesehen ist, so umfasst der Quelltext 300 des Steuerprogramms für jede weitere mögliche Typenkennung eine weitere Quelltabelle. Im in Figur 2 dargestellten Beispiel sind lediglich eine erste Quelltabelle 310 und eine zweite Quelletabelle 320 vorgesehen.

Der Quelltext 300 des Steuerprogramms umfasst weiter Quellindizes 340. Die Quellindizes 340 sind ebenfalls mit von der gewählten Programmiersprache bereitgestellten Sprachmitteln erstellt. Die Quellindizes 340 beschreiben den Aufbau der Quelltabellen 310, 320. In der Programmiersprache C können die Quellindizes 340 beispielsweise so aussehen:

```
 enum {
  ENTRY_RADIO_CONFIGURATION = 0,
  ENTRY_DISPLAY_CONFIGURATION,
 } config_entry;
```

Die gezeigten Quellindizes 340 besagen, dass die erste Quelltabelle 310 und die zweite Quelltabelle 320 jeweils zwei Konfigurationsdaten aufweisen, deren erster Auskunft über das Vorhandensein eines Radios 110 und deren zweiter Auskunft über das Vorhandensein eines Bildschirms 120 gibt.

Nachdem der Quelltext 300 des Steuerprogramms durch einen Programmierer erstellt worden ist, wird der Quelltext 300 des Steuerprogramms mittels eines bekannten Übersetzungsprogramms in das ausführbare Steuerprogramm 350 übersetzt. Das Steuerprogramm 350 liegt nach der Übersetzung in einem ausführbaren Maschinenformat vor und ist im allgemeinen nicht menschenlesbar. Das übersetzte Steuerprogramm 350 umfasst einen allgemeinen Teil 355, der eine Übersetzung des Quelltextes 305 des allgemeinen Teils des Quelltextes 300 des Steuerprogramms darstellt. Das übersetzte Steuerprogramm 350 umfasst weiter eine erste Konfigurationstabelle 360, die durch Übersetzung der ersten Quelltabelle 310 entstanden ist, eine zweite Konfigurationstabelle 370, die durch Übersetzung der zweiten Quelltabelle 320 entstanden ist und Tabellenindizes 390, die durch Übersetzung der Quellindizes 340 entstanden sind. Der allgemeine Teil 355, die erste Konfigurationstabelle 360, die zweite Konfigurationstabelle 370 und die Tabellenindizes 390 sind in binärem Maschinenformat im Steuerprogramm 350 enthalten.

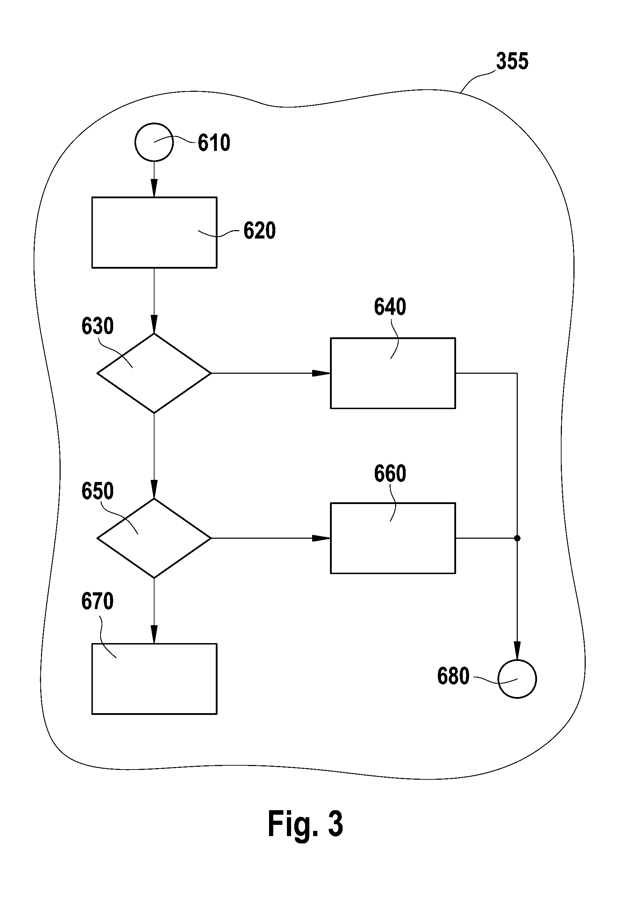

Figur 3 zeigt anhand eines schematischen Ablaufdiagramms einen Ausschnitt des allgemeinen Teils 355 des Steuerprogramms 350. Der in Figur 3 dargestellte Teil des Steuerprogramms 350 wird zur Laufzeit des Steuerprogramms 350 durch den Prozessor des jeweiligen Geräts 100, 200 ausgeführt und dient dazu, den Gerätetyp des jeweiligen Geräts 100, 200 zu erkennen. Der gezeigte Programmteil beginnt an einem ersten Einstiegspunkt 610. In einem ersten Schritt 620 liest das Steuerprogramm 350 die Typenkennung des Geräts, auf dem das Steuerprogramm 350 ausgeführt wird, aus. In einem zweiten Schritt 630 vergleicht das Steuerprogramm 350, ob die gelesene Typenkennung der ersten Typenkennung 410 entspricht. Falls dies der Fall ist, so wird in einem dritten Schritt 640 die erste Konfigurationstabelle 360 als zu verwendende Konfigurationstabelle ausgewählt.

Falls der Vergleich im zweiten Schritt 630 ergeben hat, dass die gelesene Typenkennung nicht der ersten Typenkennung 410 entspricht, so wird in einem vierten Schritt 650 verglichen, ob die gelesene Typenkennung der zweiten Typenkennung 420 entspricht. Ist dies der Fall, so wird in einem fünften Schritt 660 die zweiten Konfigurationstabelle 370 als zu verwendende Konfigurationstabelle ausgewählt.

Ergibt der Vergleich im vierten Schritt 650, dass die gelesene Typenkennung auch nicht der zweiten Typenkennung 420 entspricht, so können gegebenenfalls weitere Vergleiche mit weiteren zulässigen Typenkennungen erfolgen. Falls die gelesene Typenkennung einer weiteren zulässigen Typenkennung entspricht, so wird die dieser Typenkennung zugeordnete Konfigurationstabelle ausgewählt. Entspricht die gelesene Typenkennung keiner der zulässigen Typenkennungen, so wird in einem sechsten Schritt 670 das Vorliegen eines Fehlers erkannt.

Nachdem im dritten Schritt 640 oder im fünften Schritt 660 eine zu verwendende Konfigurationstabelle ausgewählt wurde, endet der in Figur 3 dargestellte Ausschnitt des allgemeinen Teils 355 des Steuerprogramms 350 an einem ersten Endpunkt 680.

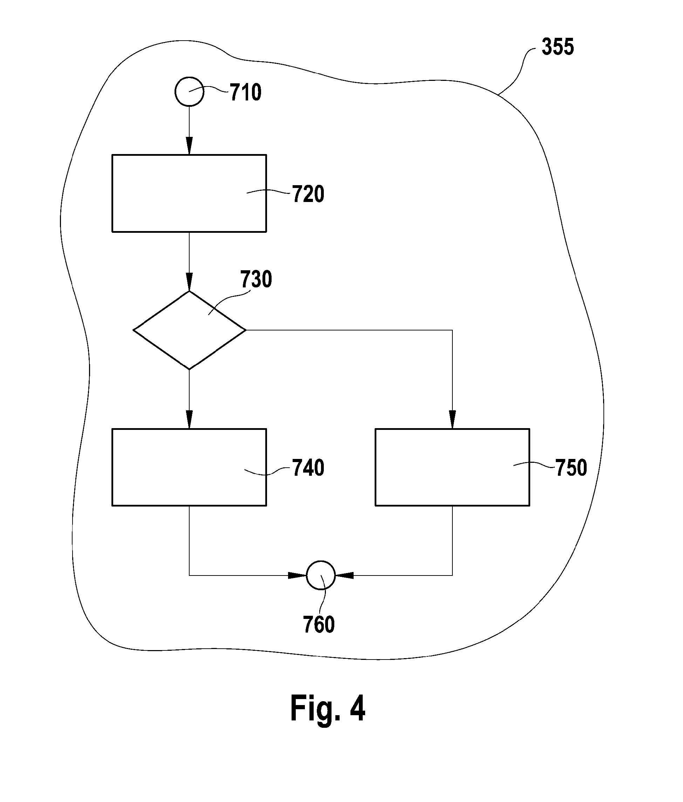

Figur 4 zeigt beispielhaft einen weiteren Ausschnitt des allgemeinen Teils 355 des Steuerprogramms 350, der die Verwendung der anhand der gelesenen Typenkennung ausgewählten zu verwendenden Konfigurationstabelle illustriert. Der gezeigte Programmausschnitt beginnt an einem zweiten Startpunkt 710. In einem siebten Schritt 720 wird das das Vorhandensein eines Radios 110 betreffende Konfigurationsdatum aus der zu verwendenden Konfigurationstabelle ausgelesen. Hierbei verwendet der allgemeine Teil 355 des Steuerprogramms 350 die Tabellenindizes 390. Im hier dargestellten Ausführungsbeispiel ist in den Tabellenindizes 390 hinterlegt, dass das das Vorhandensein eines Radios 110 betreffende Konfigurationsdatum an der jeweils ersten Position der Konfigurationstabellen 360, 370 abgelegt ist. Im siebten Schritt 720 liest das Steuerprogramm 350 somit das erste Konfigurationsdatum der ausgewählten zu verwendenden Konfigurationstabelle.

In einem achten Schritt 730 vergleicht das Steuerprogramm 350, ob das im vorhergehenden Schritt gelesene Konfigurationsdatum dem Wert "DEVICE_HAS_RADIO" entspricht, ob bei vorliegendem Gerät also ein Radio 110 vorhanden ist. Falls dies zutrifft, so wird der Programmablauf mit einem zehnten Schritt 750 fortgesetzt, in welchem das Radio 110 des vorliegenden Geräts gesteuert wird. Andernfalls wird der Programmablauf mit einem neunten Schritt 740 fortgesetzt, in dem auf die Verwendung des Radios 110 verzichtet wird. In beiden Fällen endet der dargestellte Programmausschnitt des Steuerprogramms 350 an einem zweiten Endpunkt 760.

Das Steuerprogramm 350 kann weitere Programmausschnitte aufweisen, in denen anhand der ausgewählten zu verwendenden Konfigurationstabelle erkannt wird, ob in vorliegendem Gerät eine bestimmte Gerätekomponente vorhanden ist. Je nach Vorhandensein der Gerätekomponente wird diese Gerätekomponente anschließend durch das Steuerprogramm 350 gesteuert oder auf eine Steuerung der Gerätekomponente verzichtet.

In einer anderen Ausführungsform der Erfindung ist ein weiterer Gerätetyp vorgesehen, der anstatt des Bildschirms 120 einen alternativen Bildschirm aufweist, dessen Größe sich von der des Bildschirms 120 unterscheidet. In diesem Fall prüft das Steuerprogramm 350 anhand der ausgewählten zu verwendenden Konfigurationstabelle, welcher Bildschirm im vorliegenden Gerät vorhanden ist. Im weiteren Verlauf passt das Steuerprogramm 350 eventuelle Bildschirmausgaben an die Größe des tatsächlich vorhandenen Bildschirms an.

Ein Vorteil der vorliegenden Erfindung ist, dass die Konfigurationsdaten der ersten Konfigurationstabelle 360 und der zweiten Konfigurationstabelle 370 in binärem Maschinenformat im Steuerprogramm 350 hinterlegt sind. Dadurch muss das Steuerprogramm 350 die Konfigurationsdaten zur Laufzeit nicht erst aus einem Textformat in das Maschinenformat übersetzen, was sich günstig auf das Laufzeitverhalten des Steuerprogramms 350 auswirkt. Außerdem verbrauchen die im binären Format vorliegenden Konfigurationstabellen 360, 370 weniger Speicherplatz als in einem Textformat vorliegende Konfigurationstabellen. Ein weiterer Vorteil ist, dass das Steuerprogramm 350 die einzelnen Konfigurationsdaten der Konfigurationstabellen 360, 370 mittels der Tabellenindizes 390 ansprechen kann, wodurch die Notwendigkeit einer aufwendigen Suche nach Schlüssel-Wertepaaren entfällt. Dies wirkt sich ebenfalls positiv auf das Laufzeitverhalten des Steuerprogramms 350 aus.

Da die Konfigurationstabellen 360, 370 als Quelltabellen 310, 320 mit von der gewählten Programmiersprache bereitgestellten Sprachmitteln erstellt werden, ergeben sich komplexe Konfigurationsmöglichkeiten. Beispielsweise können einzelne Konfigurationsdaten nicht lediglich als Schlüssel-Wertepaare in den Quelltabellen 310, 320 abgelegt werden, sondern es können auch komplexere Datenstrukturen der jeweiligen Programmiersprache verwendet werden. Durch die Übersetzung der Quelltabellen 310, 320 in die Konfigurationstabellen 360, 370 mittels des Übersetzers 500 kann außerdem eine Typsicherheit der Konfigurationsdaten sichergestellt werden. Beispielsweise kann einem Konfigurationsdatum ein bestimmter Datentyp zugewiesen werden. Wird einem Konfigurationsdatum etwa ein ganzzahliger Datentyp zugewiesen, so ist eine versehentliche Konfiguration mit einer rationalen Zahl ausgeschlossen, da der Übersetzer 500 in diesem Fall einen Fehler liefern würde.

Dies trägt zu einer Qualitätsverbesserung des Steuerprogramms 350 bei.

Ein weiterer Vorteil der Erfindung ist, dass dasselbe Steuerprogramm 350 in einer Vielzahl von Geräten unterschiedlicher Gerätetypen eingesetzt werden kann. Hierdurch wird die Testtiefe des Steuerprogramms 350 erhöht und die Einhaltung von Zeit-, Qualitäts- und Kostenzielen vereinfacht.

## Patentansprüche

1. Steuerbares Gerät (100, 200) mit einem Steuerprogramm (350), **dadurch gekennzeichnet, dass**
das Gerät (100, 200) einem von mindestens zwei unterschiedlichen Gerätetypen angehört,
das Steuerprogramm (350) zur Steuerung von Geräten (100, 200) geeignet ist, die einem der mindestens zwei unterschiedlichen Gerätetypen angehören,
das Steuerprogramm (350) für die unterschiedlichen Gerätetypen je eine Konfigurationstabelle (360, 370) vorhält, jede Konfigurationstabelle (360, 370) eine Anzahl von Konfigurationsdaten umfasst,
und das Steuerprogramm (350) dazu ausgebildet ist,
den Gerätetyp des Geräts (100, 200) anhand einer von dem Gerät (100, 200) bereitgestellten Typenkennung (410, 420) zu ermitteln,
die zum Gerätetyp des Geräts (100, 200) passende Konfigurationstabelle (360, 370) auszuwählen,
die in der ausgewählten Konfigurationstabelle (360, 370) enthaltenen Konfigurationsdaten zu lesen und
das Geräts (100, 200) in Abhängigkeit von den gelesenen Konfigurationsdaten zu steuern.

2. Steuerbares Gerät (100, 200) nach Anspruch 1,
wobei die Typenkennung (410, 420) in einem nichtflüchtigen Datenspeicher des Geräts (100, 200) vorgehalten wird.

3. Steuerbares Gerät (100, 200) nach Anspruch 1,
wobei die Typenkennung (410, 420) in einem Widerstandsnetzwerk des Geräts (100, 200) kodiert ist.

4. Steuerbares Gerät (100, 200) nach einem der vorhergehenden Ansprüche,
wobei die Typenkennung (410, 420) nicht durch das Steuerprogramm (350) veränderlich ist.

5. Steuerbares Gerät (100, 200) nach einem der vorhergehenden Ansprüche,
wobei die Konfigurationstabellen (360, 370) in einer binären Repräsentation im Steuerprogramm (350) vorgehalten werden.

6. Verfahren zum Erstellen eines Steuerprogramms (350) zum Steuern eines Geräts (100, 200), **dadurch gekennzeichnet, dass**
das Steuerprogramm (350) zur Steuerung eines Geräts (100, 200) geeignet ist, das einem von mindestens zwei unterschiedlichen Gerätetypen angehört,
das Steuerprogramm (350) für die unterschiedlichen Gerätetypen je eine Konfigurationstabelle (360, 370) vorhält, jede Konfigurationstabelle (360, 370) eine Anzahl von Konfigurationsdaten umfasst,
und das Steuerprogramm (350) dazu ausgebildet wird,
den Gerätetyp des Geräts (100, 200) anhand einer von dem Gerät (100, 200) bereitgestellten Typenkennung (410, 420) zu ermitteln,
die zum Gerätetyp des Geräts (100, 200) passende Konfigurationstabelle (360, 370) auszuwählen,
die in der ausgewählten Konfigurationstabelle (360, 370) enthaltenen Konfigurationsdaten zu lesen und
das Geräts (100, 200) in Abhängigkeit von den gelesenen Konfigurationsdaten zu steuern.

7. Verfahren nach einem der vorhergehenden Ansprüche,
wobei die Konfigurationstabellen (360, 370) in einer binären Repräsentation im Steuerprogramm (350) hinterlegt werden.

8. Verfahren nach einem der vorhergehenden Ansprüche,
wobei die Konfigurationstabellen (360, 370) aus Quelltabellen (310, 320) erzeugt werden,
wobei die Quelltabellen (310, 320) in einer Programmiersprache mit durch die Programmiersprache bereitgestellten Datenstrukturen definiert sind.

9. Verfahren nach Anspruch 8,
wobei die Konfigurationstabellen (360, 370) mittels eines Übersetzerprogramms (500) aus den Quelltabellen (310, 320) erzeugt werden.

10. Verfahren nach Anspruch 9,
wobei die in den Quelltabellen (310, 320) enthaltenen Konfigurationsdaten während eines Übersetzungsvorgangs auf Korrektheit geprüft werden.

11. Verfahren zum Steuern eines Geräts (100, 200), **dadurch gekennzeichnet, dass** das Verfahren folgende Verfahrensschritte aufweist:
Erkennen eines Gerätetyps des Geräts (100, 200) anhand einer von dem Gerät (100, 200) bereitgestellten Typenkennung (410, 420);
Auswählen einer zum Gerätetyp des Geräts (100, 200) passenden Konfigurationstabelle (360, 370) aus einer Mehrzahl von in einem Steuerprogramm hinterlegten Konfigurationstabellen (360, 370);
Lesen von in der ausgewählten Konfigurationstabelle (360, 370) enthaltenen Konfigurationsdaten;
Steuern des Geräts (100, 200) in Abhängigkeit von den gelesenen Konfigurationsdaten.

12. Verfahren nach Anspruch 12,
wobei die Konfigurationstabellen (360, 370) in einer binären Repräsentation im Steuerprogramm (350) hinterlegt sind.
